# EUROPÄISCHE PATENTSCHRIFT

(11) **EP 3 290 106 B1**
(45) Veröffentlichungstag und Bekanntmachung des Hinweises auf die Patenterteilung: **24.04.2019**
(21) Anmeldenummer: 17001451.8
(22) Anmeldetag: 29.08.2017
(51) Int. Cl.: B01J 19/30

(54) **FÜLLKÖRPER**
FILLING ELEMENT
CORPS DE REMPLISSAGE

(30) Priorität: 30.08.2016 DE 102016010501
(43) Veröffentlichungstag der Anmeldung: 07.03.2018
(73) Patentinhaber: Mackowiak, Jerzy, 44801 Bochum (DE)
(72) Erfinder: Mackowiak, Jerzy, 44801 Bochum (DE)
(74) Vertreter: Zeitler Volpert Kandlbinder Patent- und Rechtsanwälte Partnerschaft mbB

(56) Entgegenhaltungen:
- DE-C2- 19 715 704
- DE-U1- 7 818 664

## Beschreibung

Die Erfindung bezieht sich auf einen Füllkörper nach dem Oberbegriff des Patentanspruchs 1.

Füllkörper dienen meist als regellose Schüttung in sogenannten Füllkörperkolonnen im Bereich der thermischen Verfahrenstechnik dazu, einen intensiven Stoffaustausch innerhalb der flüssigen und gasförmigen Phase in der Kolonne herbeizuführen. Derartige Füllkörperkolonnen kommen beispielsweise in der Rektifikation, Absorption oder Extraktion zum Einsatz.

Eine Übersicht über Füllkörper verschiedener Hersteller findet sich beispielsweise in "Fluiddynamik von Füllkörpern und Packungen" des Anmelders, Springer Verlag Berlin Heidelberg New York, zweite Auflage 2003, S. 12.

Mittlerweile sind Füllkörper der vierten Generation im Einsatz. Ein Beispiel für einen solchen Füllkörper ist der "NeXRing" der Fa. Sulzer, welcher letztlich aus einem Blechstreifen mit mehreren in Längsrichtung des Streifens verlaufenden Unterabschnitten besteht, die abwechselnd zu einer Seite des Streifens, nämlich nach oben oder nach unten oder zu beiden Seiten des Streifens, d.h. nach oben und nach unten hin, gebogen sind.

Ein Füllkörper gemäß dem Oberbegriff des Patentanspruchs 1 ist aus der DE 197 15 704 C2 bekannt. Der mittlere Abschnitt dieses Füllkörpers ist in Form einer geschlossenen Ringumwandung gebildet, an den sich zu beiden Seiten hin Außenabschnitte unmittelbar anschließen. Jeder Außenabschnitt ist durch drei radiale Einbiegungen gebildet, so dass jeder Außenabschnitt etwa die Form eines dreischenkligen Sterns mit abgerundeten, nach innen und außen weisenden Scheiteln hat. Es hat sich gezeigt, dass dieser, McPac® genannte Füllkörper kurze Kontaktzeiten der im Inneren des Füllkörpers herabfallenden Tropfen ermöglicht und der erhöhte Anteil der "offenen" Fläche des Füllkörpers zu einer höheren Belastbarkeit, einer erhöhten Trennleistung und einem geringeren Druckverlust führt. Schon bei diesem Füllkörper ist die für den Stoffaustausch aktive, d.h. die den Stoffaustausch beeinflussende Fläche, welche durch die Einbiegungen gebildet wird, deutlich erhöht.

Der Erfindung liegt die Aufgabe zugrunde, einen Füllkörper der eingangs erwähnten Art weiter zu verbessern, insbesondere eine noch effektivere Stofftrennung zu ermöglichen, die Belastbarkeit weiter zu verbessern und einen verringerten Druckverlust bei der Durchströmung der Schüttung zu ermöglichen.

Diese Aufgabe wird erfindungsgemäß durch einen Füllkörper mit den Merkmalen des Patentanspruchs 1 gelöst. Vorteilhafte Weiterbildungen sind Gegenstand der abhängigen Ansprüche.

Der Erfindung liegt der Gedanke zugrunde, die sternförmig ausgestaltete Mantelfläche der beiden Außenabschnitte weiter zu unterteilen und damit noch mehr Ablaufstellen für die gebildeten Tropfen zu ermöglichen. Dadurch ergibt sich eine noch größere Abtropffläche, welche eine größere Stoffaustauschfläche und damit eine größere Trennleistung ermöglicht. Letztlich ergeben sich dadurch auch eine verbesserte Gasverteilung innerhalb der Schüttung und vermehrte Gas/Flüssigkeit-Kontaktpunkte. Jede Einbiegung hat erfindungsgemäß nämlich wenigstens zwei Unterabschnitte, von denen der eine weiter nach innen gerichtet ist als der andere. Damit können die herabfallenden Tropfen über eine kürzere Distanzstrecke fallen und damit eine kürzere Kontaktzeit mit der Gasphase haben, wodurch sich der Stoffaustausch verbessert. Ferner hat jede Einbiegung durch die zwei Unterabschnitte letztlich Stege mit geringerer Breite, was zu einem geringeren Strömungswiderstand und damit zu einer höheren Flutgrenze beiträgt. Kolonnen, bei denen der erfindungsgemäße Füllkörper zum Einsatz kommt, können daher kleiner dimensioniert werden. Sofern bereits vorhandene Kolonnen mit dem erfindungsgemäßen Füllkörper bestückt werden, ermöglicht dies einen höheren Gasdurchsatz. Besonders vorteilhaft ist die verfeinerte Gitterstruktur letztlich bei zu Verschmutzung neigenden, feststoffhaltigen Medien, wie z.B. bei reaktiven Absorptionen mit Feststoffbildung im Bereich der Schlammtrocknung oder bei der Brüdenkondensation sowie bei der Prozessgasreinigung z.B. von Kupfer, Aluminium, Eisen enthaltenden Stoffen, also beispielsweise allgemein bei der Prozessgasreinigung in der Stahlindustrie.

Gemäß einer vorteilhaften Weiterbildung schließt sich der eine, weiter nach innen gerichtete Unterabschnitt jeder Einbiegung in axialer Richtung des Füllkörpers unmittelbar an die zylindrische Mantelfläche und der andere, weniger weit nach innen gerichtete Unterabschnitt in axialer Richtung unmittelbar an den einen, weiter nach innen gerichteten Unterabschnitt an. Dadurch wechselt letztlich die Form und das Maß der Querschnittsfläche in dem betreffenden Abschnitt des Füllkörpers. Dadurch lässt sich eine verbesserte Variation im Bereich der Umfangsfläche jedes Abschnitts und eine kürzere Kontaktzeit der Tropfen mit der Gasphase erreichen.

Vorteilhafterweise weist der andere, weniger weit nach innen gerichtete Unterabschnitt eine Sicke auf. Dadurch kann die herabtropfende Flüssigkeit eine Richtungsänderung erfahren, was sich günstig auf den Stoffaustausch auswirken kann.

Gemäß einer anderen Weiterbildung sind die anderen, weniger weit nach innen gerichteten Unterabschnitte jeder Einbiegung der Außenabschnitte an den beiden axialen Enden jedes Füllkörpers angeordnet. Damit bieten sich für herabfallende Flüssigkeitstropfen mehr Kontaktflächen mit dem Füllkörper, was zu einer gleichmäßigeren Phasenverteilung über den Querschnitt der Kolonne führen und damit einer sogenannten Maldistribution entgegen wirken kann.

Gemäß einer anderen Weiterbildung ist die Höhe der wenigstens zwei Unterabschnitte jedes Außenabschnitts gleich. Ein solcher Füllkörper ist damit relativ einfach und unkompliziert herstellbar und weist eine relativ hohe Stabilität auf.

Vorteilhafterweise ist die Ringumwandung aus einem metallischen, zylindrisch gebogenen Blechstreifen, in den die Einbiegungen eingestanzt sind, gebildet. Auch die unterschiedlich geformten Unterabschnitte jeder Einbiegung können auf relativ einfache Art und Weise mittels Stanzen gefertigt werden. Ein solcher Füllkörper ist damit sehr effektiv herstellbar.

Gemäß einer bevorzugten Weiterbildung beträgt das Verhältnis des radialen Abstandes zwischen der zylindrischen Mantelfläche des mittleren Abschnitts und dem anderen, weniger weit nach innen gerichteten Unterabschnitt einer Einbiegung eines Außenabschnitts zu dem radialen Abstand zwischen der zylindrischen Mantelfläche des mittleren Abschnitts und dem einen, weiter nach innen gerichteten Unterabschnitt der Einbiegung etwa 20 - 60%, vorzugsweise 25 - 45% besonders bevorzugt 30 - 35%. Diese Weiterbildung trägt zu einem optimierten Druckverlust innerhalb der Kolonne bei, was sich günstig auf den Energieverbrauch zum Betreiben einer solchen Kolonne auswirkt. Außerdem hat ein solcher Füllköper Vorteile bei der Belastbarkeit.

Ausführungsbeispiele des Erfindungsgegenstandes werden nachfolgend anhand der Zeichnungen näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische, perspektivische Ansicht eines erfindungsgemäßen Füllköpers;
- Fig. 2: eine Draufsicht auf einen solchen Füllkörper gemäß Ansicht "F" in Fig. 4;
- Fig. 3: eine schematische, perspektivische Ansicht des Füllkörpers in einer im Vergleich zu Fig. 1 gedrehten Stellung;
- Fig. 4: eine schematische Vorderansicht des Füllkörpers gemäß Fig. 2;
- Fig. 5: einen schematischen Querschnitt durch den Füllkörper gemäß der Linie D-D in Fig. 4;
- Fig. 6: eine schematische, perspektivische Ansicht des Teils des Füllkörpers gemäß Fig. 5;
- Fig. 7: einen schematischen Querschnitt durch den Füllkörper gemäß der Linie C-C in Fig. 4;
- Fig. 8: eine schematische, perspektivische Ansicht des Teils des Füllkörpers gemäß Fig. 7;
- Fig. 9: einen schematischen Querschnitt durch den Füllkörper gemäß der Linie B-B in Fig. 4;
- Fig. 10: eine schematische, perspektivische Ansicht des Teils des Füllkörpers gemäß Fig. 9;
- Fig. 11: einen schematischen Querschnitt durch den Füllkörper gemäß der Linie A-A in Fig. 4;
- Fig. 12: eine schematische, perspektivische Ansicht des Teils des Füllkörpers gemäß Fig. 11; und
- Fig. 13: eine schematische Ansicht der Einzelheit VIII in Fig. 4 in vergrößertem Maßstab.

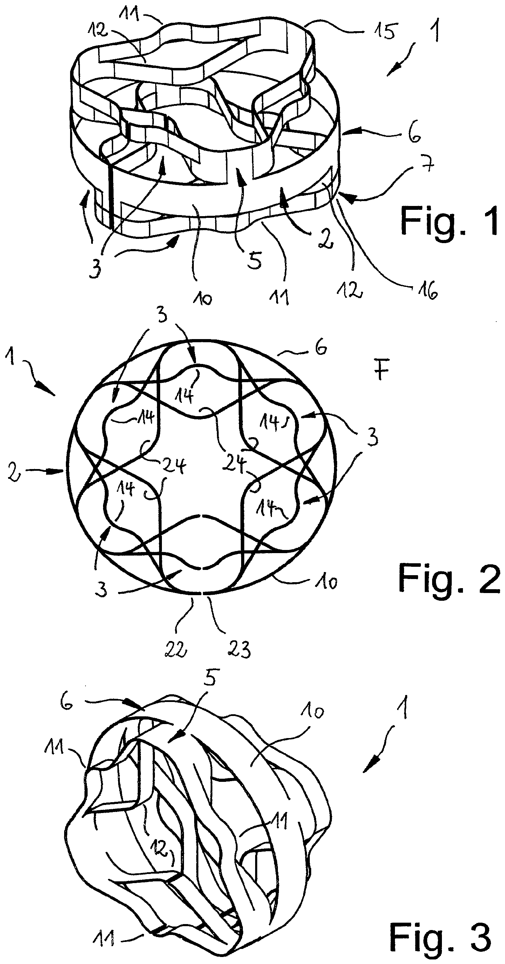

In Fig. 1 ist eine schematische, perspektivische Ansicht eines erfindungsgemäßen Füllkörpers 1 dargestellt. Ein solcher Füllkörper eignet sich insbesondere für den Einsatz in Füllkörperkolonnen (nicht dargestellt) im Bereich der thermischen Verfahrenstechnik.

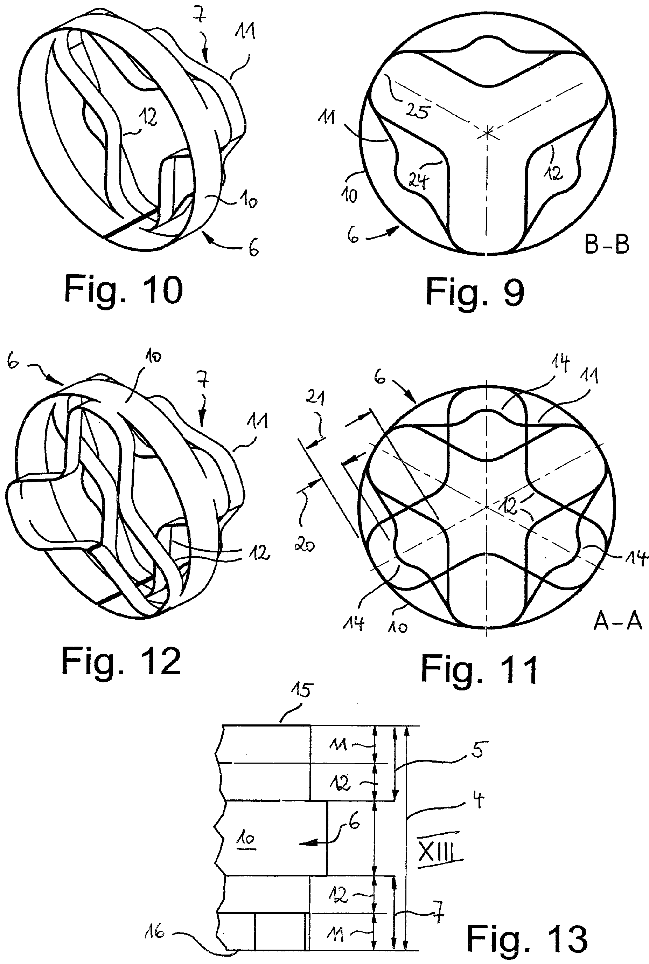

Der Füllkörper 1 hat eine Ringumwandung 2 und aus dem Material der Ringumwandung 2 nach innen gerichtete Einbiegungen 3. Wie insbesondere den Fig. 1 und 13 zu entnehmen ist, ist die Gesamthöhe 4 des Füllkörpers 1 in wenigstens drei Abschnitte 5 bis 7 unterteilt. Von diesen ist der mittlere Abschnitt 6 durch eine zylindrische Mantelfläche 10 der Ringumwandung 2 gebildet, während die sich an den mittleren Abschnitt 6 jeweils anschließenden Außenabschnitte 5 und 7 mehrere miteinander verbundene Einbiegungen 3 in Form eines Sterns aufweisen. Gemäß dem in den Figuren gezeigten Ausführungsbeispiel hat jeder Außenabschnitt 5, 7 drei Einbiegungen, so dass sich insgesamt für jeden Außenabschnitt in der Drauf- oder Unteransicht ein dreischenklig geformter Stern ergibt, wobei die Schenkel jedes Sterns in unterschiedlich ausgestaltete und versetzt zueinander angeordnete Unterabschnitte unterteilt sind, wie nachfolgend erläutert wird.

Dazu hat nämlich jede Einbiegung 3 wenigstens zwei Unterabschnitte 11, 12, von denen der eine, nämlich der Unterabschnitt 12, in seiner Längsmitte im Vergleich zur zylindrischen Mantelfläche 10 weiter radial nach innen gerichtet angeordnet ist als der andere, nämlich der Unterabschnitt 11, im Bereich von dessen Längsmitte.

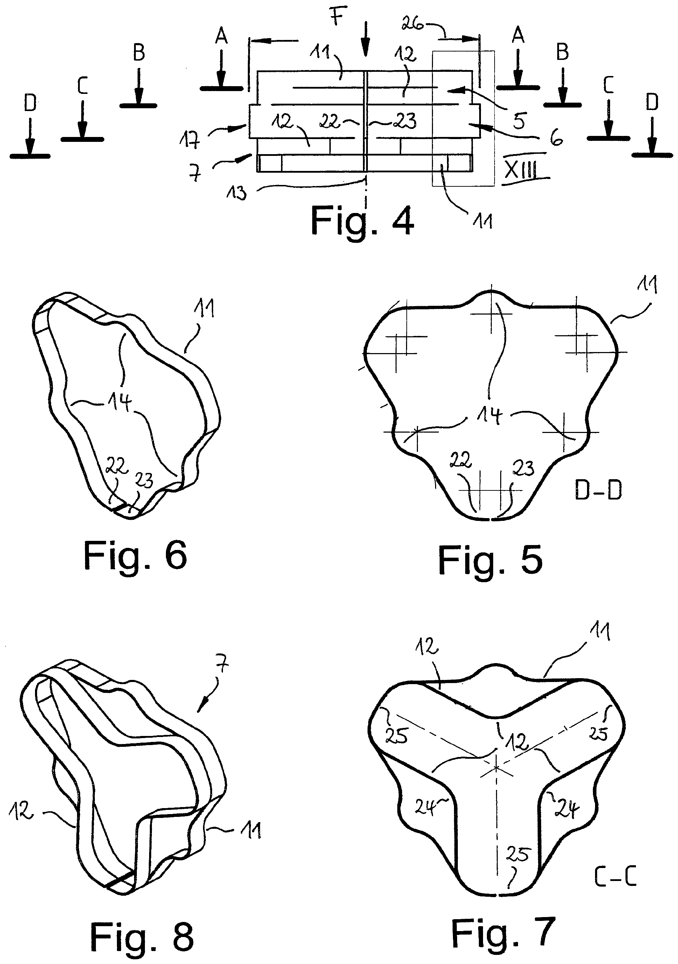

Wie beispielsweise in den Fig. 1 und 13 angedeutet schließt der eine, weiter nach innen gerichtete Unterabschnitt 12 jeder Einbiegung 3 sich in axialer Richtung 13 (siehe beispielsweise Fig. 4) des Füllkörpers 1 unmittelbar an die zylindrische Mantelfläche 10 und der andere, weniger weit nach innen gerichtete Unterabschnitt 11 sich in axialer Richtung 13 unmittelbar an den einen, weiter nach innen gerichteten Unterabschnitt 12 an. Das bedeutet, dass die Innenflächen jedes Sterns, welche die Einbiegungen 3 bilden, in radialer Richtung des Füllkörpers zueinander versetzt angeordnet sind, wie dies insbesondere den Fig. 1 bis 3 zu entnehmen ist.

Wie ferner den Fig. 1 bis 3 sowie 5 bis 9 und 11 zu entnehmen ist, weist der andere, weniger weit nach innen gerichtete Unterabschnitt 11 jeweils eine Sicke 14 auf. Wie gezeigt, befindet sich diese Sicke 14 vorzugsweise in der Längsmitte des betreffenden Unterabschnitts jeder Einbiegung.

Fig. 1 verdeutlicht ferner, dass die anderen, weniger weit nach innen gerichteten Unterabschnitte 11 jeder Einbiegung 3 der Außenabschnitte 5, 7 an den beiden axialen Enden 15, 16 jedes Füllkörpers 1 angeordnet sind.

Gemäß Fig. 13, in welcher die Einzelheit VIII gemäß Fig. 4 in vergrößertem Maßstab dargestellt ist, ist die Höhe der wenigstens zwei Unterabschnitte 11, 12 jedes Außenabschnitts 5, 7 gleich. Den Fig. 1 bis 12 ist ferner zu entnehmen, dass die Ringumwandung 2 aus einem metallischen, zylindrisch gebogenen Blechstreifen 17 gebildet ist, in den die Einbiegungen 3 einschließlich der unterschiedlich eingebogenen Unterabschnitte jeder Einbiegung eingestanzt sind.

Gemäß den Fig. 2 und 11 beträgt das Verhältnis des radialen Abstandes 20 zwischen der zylindrischen Mantelfläche 10 des mittleren Abschnitts 6 und dem anderen, weniger weit nach innen gerichteten Unterabschnitt 11 einer Einbiegung 3 eines Außenabschnitts 5, 7 zu dem radialen Abstand 21 zwischen der zylindrischen Mantelfläche 10 des mittleren Abschnitts 6 und dem einen, weiter nach innen gerichteten Unterabschnitt 12 der Einbiegung etwa 20 - 60%, vorzugsweise 25 - 45%, besonders bevorzugt 30 - 35%. Dabei wurde der radiale Abstand 20, 21, wie Fig. 11 zu entnehmen ist, an der Stelle der maximalen Einbiegung 3 des weiter nach innen gerichteten Unterabschnitts 12 und in der Mitte der Sicke 14 des weniger weit nach innen gerichteten Unterabschnitts 11 bestimmt.

Da die Ringumwandung 12 letztlich aus dem zylindrisch gebogenem Blechstreifen 17 besteht, stoßen die freien Enden 22, 23 des Blechstreifens 17 unter Belassung eines geringen Zwischenraums aneinander (vgl. beispielsweise Fig. 2).

In den Fig. 5, 7, 9, 11 sind Querschnitte entlang den Linien D - D (siehe Fig. 5), C - C (siehe Fig. 7), B - B (siehe Fig. 9), A - A (siehe Fig. 11) schematisch dargestellt. Perspektivische Ansichten des jeweiligen Teils des Füllkörpers sind in den Fig. 6, 8, 10, 12 gezeigt.

Bei dem erfindungsgemäßen Füllkörper 1 stellt also lediglich der mittlere Abschnitt 6 mit seiner zylindrischen Mantelfläche 10 die eigentliche Umwandung dar, während die Außenabschnitte 5, 7 in weiten Bereichen nach innen gebogen sind und pro Außenabschnitt 5, 7 vorzugsweise den vorerwähnten dreischenkligen Stern mit abgerundeten, nach innen und außen weisenden Scheiteln 24, 25 bilden.

Anhand experimenteller Untersuchungen hat sich ergeben, dass für den Stofftransport, den Druckverlust und die Belastbarkeit der aus einer Vielzahl von Füllkörpern bestehenden Schüttung der Anteil der offenen Fläche, das sind im Falle der Erfindung insbesondere die beiden Außenabschnitte, entscheidend ist. Im Inneren des Füllkörpers entstehen gerade auch durch die Unterteilung jeder Einbiegung in wenigstens zwei unterschiedlich gebogene Unterabschnitte erfindungsgemäß weiter verkürzte Abstände zwischen den Einbiegungen in axialer Richtung, wodurch möglichst kurze Kontaktzeiten der im Inneren des Füllkörpers herabfallenden Tropfen erreicht werden. Der erfindungsgemäß weiter erhöhte Anteil der vorerwähnten offenen Fläche des Füllkörpers führt letztlich zu einer höheren Belastbarkeit, einer erhöhten Trennleistung und einem geringeren Druckverlust. Insgesamt ist also bei dem erfindungsgemäßen Füllkörper die für den Stoffaustausch aktive, d.h. die den Stoffaustausch beeinflussende Fläche, welche insbesondere durch die unterschiedlich geformten Unterabschnitte der Einbiegungen gebildet wird, nochmals deutlich erhöht. Insofern lässt sich mit dem erfindungsgemäßen Füllkörper eine nochmals verbesserte Trennleistung erreichen.

Die Wanddicke des vorerwähnten metallischen Blechs kann etwa 0,25 bis 0,7 mm betragen. Es ist aber auch möglich, den Füllkörper aus einem anderen Werkstoff zu fertigen. Die Gesamthöhe 4 des Füllkörpers kann z.B. 15, 30 oder 45 mm, der Gesamtdurchmesser 26 des Füllkörpers kann bei den vorgenannten Höhen 30, 60, 90 mm betragen.

Wie bereits erwähnt weisen die Einbiegungen 3 nach innen und außen weisende Scheitel 24, 25 in abgerundeter Form auf, so dass der erfindungsgemäße Füllkörper in Schüttungen weniger leicht zu Verkantungen neigt und letztlich pro m³ der Trennkolonne mehr Füllkörper als bei herkömmlichen Schüttungen angeordnet werden können. Dadurch wird die Trennleistung der Schüttung erhöht.

Fig. 4 und 13 lässt sich entnehmen, dass der Gesamtdurchmesser 26 des Füllkörpers 1 größer ist als dessen Gesamthöhe 4, wobei das Verhältnis von Gesamthöhe 4 zu Gesamtdurchmesser 26 vorzugsweise etwa 1 : 2 beträgt.

Bei dem erfindungsgemäßen Füllkörper 1 ist die Ringumwandung 2 optimal ausgenutzt, so dass dieser Füllkörper eine gute Durchmischung von gasförmiger und flüssiger Phase gewährleistet.

Den Fig. 4 und 13 lässt sich ferner entnehmen, dass die Fläche des mittleren Abschnitts 6 etwa 33% der gesamten Füllkörperfläche beträgt, wohingegen etwa 67% der gesamten Füllkörperfläche auf die Außenabschnitte 5, 7 mit ihren sternförmig eingebogenen Abschnitten der Ringumwandung entfallen. Somit sind 2/3 der Füllkörperoberfläche nach innen gebogen, wo die Strömungswiderstände bekanntlich am geringsten sind. Der erfindungsgemäße Füllkörper setzt also den strömenden Medien einen im Vergleich zu herkömmlichen Füllkörpern verringerten Widerstand entgegen, so dass letztlich der Druckverlust pro Meter Schütthöhe weiter reduziert ist. Jeder Füllkörper hat in der Schüttung einen engen Kontakt zu dem benachbarten Füllkörpern, so dass, wie zuvor erwähnt, pro m³ des Volumens der Trennkolonne mehr Füllkörper untergebracht werden können. Dadurch unterliegt die herabfließende Flüssigkeit einer häufigeren Oberflächenerneuerung auf einer Länge, die durch die erfindungsgemäß ausgebildeten Unterabschnitte jeder Einbiegung weniger als ein Drittel der gesamten Füllkörperhöhe entspricht, was einer der Grundvoraussetzungen für einen hohen Stoffübergangskoeffizienten bei der Stoff-übertragung in einer Trennkolonne ist. Mit dem erfindungsgemäßen Füllkörper lassen sich deshalb weiter erhöhte Trennleistungen bei ein und derselben Kolonne erzielen. Umgekehrt kann, wie zuvor erwähnt, bei Vorgabe eines bestimmten Trennergebnisses unter Verwendung der erfindungsgemäßen Füllkörper beispielsweise die Höhe der Trennkolonne im Vergleich zu einer Kolonne mit herkömmlichen Füllkörpern verringert werden. Trotz der Unterteilung der Einbiegungen in zwei Unterabschnitte bilden diese die Form eines dreischenkligen Sterns aus und ermöglichen so eine Stützkonstruktion für den Füllkörper, so dass dieser beispielsweise aus einem sehr dünnen Blech hergestellt werden kann. Dadurch reduziert sich der Materialverbrauch der für die Herstellung von einem m³ Schüttung der Füllkörper erforderlich ist. Ferner lässt sich für die gesamte Füllkörperkolonne eine nicht unerhebliche Gewichtseinsparung erzielen.

Der Füllkörper ist auf einfache Weise aus Metall, Kunststoff oder Keramik herstellbar.

Derartige Füllkörper finden eine weite Verbreitung insbesondere in der chemischen Industrie, der Lebensmittel- und der Petrochemie, auf dem Gebiet der Metallurgie und der Gasreinigung sowie in Geruchsminderungsanlagen.

Die etwa sternförmige Ausbildung des einen Außenabschnitts ist, wie beispielsweise den Fig. 1 bis 3 zu entnehmen ist, z.B. um 60° zu der sternförmigen Ausbildung des anderen Außenabschnitts versetzt.

Damit ist ein Füllkörper geschaffen, dessen Effektivität weiter verbessert ist, mit dem sich eine weiter verbesserte Belastbarkeit, ein geringerer Druckverlust und damit eine höhere Trennleistung erzielen lässt.

## Patentansprüche

1. Füllkörper insbesondere für den Einsatz in Füllkörperkolonnen im Bereich der thermischen Verfahrenstechnik,
mit einer Ringumwandung (2) und aus dem Material der Ringumwandung (2) nach innen gerichteten Einbiegungen (3),
wobei die Gesamthöhe (4) des Füllkörpers (1) in wenigstens drei Abschnitte (5, 6, 7) unterteilt ist, von denen der mittlere Abschnitt (6) durch eine zylindrische Mantelfläche (10) der Ringumwandung (2) gebildet ist und die sich an den mittleren Abschnitt (6) jeweils anschließenden Außenabschnitte (5, 7) mehrere miteinander verbundene Einbiegungen (3) in Form eines Sterns aufweisen, **dadurch gekennzeichnet, dass** jede Einbiegung (3) wenigstens zwei sich in axialer Richtung (13) des Füllkörpers (1) aneinander anschließende Unterabschnitte (11, 12) aufweist, von denen der eine (12) weiter nach innen gerichtet ist als der andere (11).

2. Füllkörper nach Anspruch 1, **dadurch gekennzeichnet, dass** der eine, weiter nach innen gerichtete Unterabschnitt (12) jeder Einbiegung (3) sich in axialer Richtung (13) des Füllkörpers (1) unmittelbar an die zylindrische Mantelfläche (10) und der andere, weniger weit nach innen gerichtete Unterabschnitt (11) sich in axialer Richtung (13) unmittelbar an den einen, weiter nach innen gerichteten Unterabschnitt (12) anschließt.

3. Füllkörper nach Anspruch 1 oder 2, **dadurch gekennzeichnet, dass** der andere, weniger weit nach innen gerichtete Unterabschnitt (11) eine Sicke (14) aufweist.

4. Füllkörper nach einem der Ansprüche 1 bis 3, **dadurch gekennzeichnet, dass** die anderen, weniger weit nach innen gerichteten Unterschnitte (11) jeder Einbiegung (3) der Außenabschnitte (5, 7) an den beiden axialen Enden (15, 16) jedes Füllkörpers (1) angeordnet sind.

5. Füllkörper nach einem der vorhergehenden Ansprüche, **dadurch gekennzeichnet, dass** die Höhe der wenigstens zwei Unterabschnitte (11, 12) jedes Außenabschnitts (5, 7) gleich ist.

6. Füllkörper nach einem der vorhergehenden Ansprüche, **dadurch gekennzeichnet, dass** die Ringumwandung (2) aus einem metallischen, zylindrisch gebogenem Blechstreifen (17) gebildet ist, in den die Einbiegungen (3) eingestanzt sind.

7. Füllkörper nach einem der vorhergehenden Ansprüche, **dadurch gekennzeichnet, dass** das Verhältnis des radialen Abstandes (20) zwischen der zylindrischen Mantelfläche (10) des mittleren Abschnitts (6) und dem anderen, weniger weit nach innen gerichteten Unterabschnitt (11) einer Einbiegung (3) eines Außenabschnitts (5, 7) zu dem radialen Abstand (21) zwischen der zylindrischen Mantelfläche (10) des mittleren Abschnitts (6) und dem einen, weiter nach innen gerichteten Unterabschnitt (12) der Einbiegung (3) etwa 20 - 60%, vorzugsweise 25 - 45%, besonders bevorzugt 30 - 35% beträgt.

## Claims

1. Packing element particularly for use in packed columns in the field of thermal process technology, having an annular surrounding wall (2) and inwardly directed deflections (3) of the material of the annular surrounding wall (2), the overall height (4) of the packing element (1) being divided into at least three sections (5, 6, 7) of which the central section (6) is formed by a cylindrical circumferential surface (10) of the annular surrounding wall (2), and the outer sections (5, 7), which are each connected to the central section (6), have a plurality of interconnected deflections (3) which form a star, **characterised in that** each deflection (3) has at least two sub-sections (11, 12) which are connected to one another in the axial direction (13) of the packing element (1), one (12) of which is directed inwards for a longer distance than the other (11).

2. Packing element according to claim 1, **characterised in that** the one sub-section (12) of each deflection (3) which is directed inwards for a longer distance is connected directly to the cylindrical circumferential surface (10) in the axial direction (13) of the packing element (1), and the other sub-section (11), which is directed inwards for a shorter distance, is connected, in the axial direction (13), directly to the one sub-section (12) which is directed inwards for a longer distance.

3. Packing element according to claim 1 or 2, **characterised in that** other sub-section (11) which is directed inwards for a shorter distance has a corrugation (14).

4. Packing element according to one of claims 1 to 3, **characterised in that** the other sub-sections (11) of each deflection (3) of the outer sections (5, 7), which sub-sections (11) are directed inwards for a shorter distance, are arranged at the two axial ends (15, 16) of each packing element (1).

5. Packing element according to one of the preceding claims, **characterised in that** the heights of the at least two sub-sections (11, 12) of each outer section (5, 7) are the same.

6. Packing element according to one of the preceding claims, **characterised in that** the annular surrounding wall (2) is formed from a strip of sheet metal (17) which is bent into a cylinder and into which the deflections (3) are pressed or stamped.

7. Packing element according to one of the preceding claims, **characterised in that** the radial distance (20) between the cylindrical circumferential surface (10) of the central section (6) and the other sub-section (11) of a deflection (3) of an outer section (5, 7), which other sub-section (11) is directed inwards for a shorter distance, is a certain proportion of the radial distance (21) between the cylindrical circumferential surface (10) of the central section (6) and the one sub-section (12) of the deflection (3) which is directed inwards for a longer distance, and this proportion is approximately 20 - 60%, and preferably 25 - 45%, and as a particular preference 30 - 35%.

## Revendications

1. Corps de remplissage en particulier pour l'utilisation dans des colonnes à corps de remplissage dans le domaine de la technologie des procédés thermiques, comportant
une paroi annulaire (2) et des inflexions (3) dirigées vers l'intérieur à partir du matériau de la paroi annulaire (2),
la hauteur totale (4) du corps de remplissage (1) étant subdivisée en au moins trois portions (5, 6, 7) dont la portion centrale (6) est formée par une surface enveloppe cylindrique (10) de la paroi annulaire (2) et dont les portions extérieures (5, 7) respectives qui se raccordent à la portion centrale (6) présentent plusieurs inflexions (3) reliées entre elles et se présentant en forme d'étoile,
**caractérisé en ce que**
chaque inflexion (3) comprend au moins deux portions auxiliaires (11, 12) qui se raccordent l'une à l'autre en direction axiale (13) du corps de remplissage (1) et dont l'une (12) est dirigée plus vers l'intérieur que l'autre (11).

2. Corps de remplissage selon la revendication 1,
**caractérisé en ce que**
ladite une portion auxiliaire (12) de chaque inflexion (3) dirigée plus vers l'intérieur se raccorde directement à la surface enveloppe cylindrique (10) en direction axiale (13) du corps de remplissage (1), et l'autre portion auxiliaire (11) dirigée moins vers l'intérieur se raccorde en direction axiale (13) directement à ladite une portion auxiliaire (12) dirigée plus vers l'intérieur.

3. Corps de remplissage selon la revendication 1 ou 2,
**caractérisé en ce que**
l'autre portion auxiliaire (11) dirigée moins vers l'intérieur présente une moulure (14).

4. Corps de remplissage selon l'une des revendications 1 à 3,
**caractérisé en ce que**
les autres portions auxiliaires (11) de chaque inflexion (3) des portions extérieures (5, 7), qui sont dirigées moins vers l'intérieur sont agencées aux deux extrémités axiales (15, 16) de chaque corps de remplissage (1).

5. Corps de remplissage selon l'une des revendications précédentes,
**caractérisé en ce que**
les hauteurs desdites au moins deux portions auxiliaires (11, 12) de chaque portion extérieure (5, 7) sont identiques.

6. Corps de remplissage selon l'une des revendications précédentes,
**caractérisé en ce que**
la paroi annulaire (2) est formée à partir d'une bande en tôle (17) métallique cintrée en forme cylindrique dans laquelle les inflexions (3) sont estampées.

7. Corps de remplissage selon l'une des revendications précédentes,
**caractérisé en ce que**
le rapport de la distance radiale (20) entre la surface enveloppe cylindrique (10) de la portion centrale (6) et l'autre portion auxiliaire (11), dirigée moins vers l'intérieur, d'une inflexion (3) d'une portion extérieure (5, 7) sur la distance radiale (21) entre la surface enveloppe cylindrique (10) de la portion centrale (6) et ladite une portion auxiliaire (12) de l'inflexion (3) dirigée plus vers l'intérieur est d'environ 20 à 60 %, de préférence de 25 à 45 %, de manière particulièrement préférée de 30 à 35 %.
